# EUROPEAN PATENT APPLICATION

(11) **EP 4 484 719 A1**
(43) Date of publication of application: **01.01.2025**
(21) Application number: 23759606.9
(22) Date of filing: 01.02.2023
(51) Int. Cl.: F01K 23/10

(54) **PLANT**

(30) Priority: 25.02.2022 JP 2022027887
(71) Applicant: Mitsubishi Heavy Industries, Ltd., Tokyo 100-8332 (JP)
(72) Inventor: UECHI, Hideyuki, Tokyo 100-8332 (JP); SONG, Hanjoon, Tokyo 100-8332 (JP); SAITO, Keijiro, Tokyo 100-8332 (JP)
(74) Representative: Müller Schupfner & Partner Patent- und Rechtsanwaltspartnerschaft mbB (Hamburg)
(86) International application number: PCT/JP2023/003197
(87) International publication number: WO 2023/162600

(57) **Abstract**

A plant includes: a synthesis reactor that causes an exothermic chemical reaction of a raw material fluid containing a specific substance to produce a post-reaction fluid containing a compound; a heat medium supply line that recovers heat generated by the exothermic chemical reaction in the synthesis reactor; and a heat source usage facility that uses a heat medium fluid from which heat has been recovered by the heat medium supply line as a heat source.

## Description

### TECHNICAL FIELD

The present disclosure relates to a plant.

Priority is claimed on Japanese Patent Application No. 2022-027887, filed February 25, 2022, the content of which is incorporated herein by reference.

### BACKGROUND ART

It is desired to reduce the release of carbon dioxide into the atmosphere, which is emitted from the combustion of fossil fuels and the like. In response to this, for example, Patent Document 1 discloses a configuration of a synthesis plant that produces a compound such as methanol by synthesizing carbon dioxide contained in a carbon dioxide-containing gas discharged from a carbon dioxide emission plant with hydrogen discharged from a byproduct hydrogen emission plant.

### Citation List

### Patent Document

Patent Document 1: Japanese Unexamined Patent Application, First Publication No. 2020-189817

### SUMMARY OF INVENTION

### Technical Problem

However, in the configuration described in Patent Document 1, it is necessary to heat a mixed gas of carbon dioxide and hydrogen to a temperature at which the catalyst becomes active in order to promote the reaction between carbon dioxide and hydrogen. Further, since the post-reaction compound has a high temperature including a reaction heat, the compound needs to be cooled. In addition, processes such as distillation and rectification may be used in order to increase the purity of the obtained compound. In this way, heat energy is required for the heating, cooling, and distilling processes used to produce the compound. In such a synthesis plant, it is desired to use thermal energy efficiently.

The present disclosure has been made to solve the above-described problems and an object thereof is to provide a plant that can efficiently use thermal energy when producing a compound.

### Solution to Problem

In order to solve the above-described problems, a plant according to the present disclosure includes a synthesis reactor, a heat medium supply line, and a heat source usage facility. The synthesis reactor causes an exothermic chemical reaction of a raw material fluid containing a specific substance to produce a post-reaction fluid containing a compound. The heat medium supply line recovers the heat generated by the exothermic chemical reaction in the synthesis reactor. The heat source usage facility uses a heat medium fluid which heat has been recovered heat in the heat medium supply line as a heat source.

A plant according to the present disclosure includes: a drive machine that is driven by a fuel; a recovery section that recovers carbon dioxide in an exhaust gas of the drive machine; and a synthesis reactor that causes a chemical reaction of a raw material fluid containing carbon dioxide recovered by the recovery section to produce a post-reaction fluid containing a compound, wherein the compound is used as the fuel of the drive machine.

A plant according to the present disclosure includes: a synthesis reactor that causes a chemical reaction of a raw material fluid to produce a crude fluid containing a compound; a distillation section that applies a heat to the crude fluid for distillation and obtains a product fluid having an increased concentration of the compound; a crude fluid delivery pipe that extracts the crude fluid from between the synthesis reactor and the distillation section; and a product fluid delivery pipe that extracts the product fluid after distillation from the distillation section, wherein when the heat available in the distillation section is large, the ratio of the flow rate of the product fluid extracted from the product fluid delivery pipe to the sum of the flow rate of the product fluid extracted from the product fluid delivery pipe and the flow rate of the crude fluid extracted from the crude fluid delivery pipe is increased compared to when the heat available in the distillation section is small.

A plant according to the present disclosure includes: a cooling section that cools a fluid and condenses a part of the fluid; a separator that separates a liquid phase of the fluid; a heating section that heats the liquid phase of the fluid and vaporizes at least a part of the liquid phase; and a distillation section that distills the liquid phase of the fluid heated in the heating section, wherein the heating section heats the liquid phase of the post-reaction fluid by using a condensation heat generated in the cooling section.

A plant according to the present disclosure includes: a preheater that preheats a gas phase raw material fluid; and a synthesis reactor that causes a chemical reaction of the raw material fluid preheated by the preheater to obtain a post-reaction fluid, wherein in the preheater, the post-reaction fluid is cooled by the heat exchange between the post-reaction fluid on a high temperature side and the raw material fluid on a low temperature side, and wherein a boiling point of the post-reaction fluid is higher than a boiling point of the raw material fluid, and at least a part of the post-reaction fluid is condensed on a high temperature side of the preheater.

### Advantageous Effects of Invention

According to the plant of the present disclosure, it is possible to efficiently use thermal energy when producing a compound.

### BRIEF DESCRIPTION OF DRAWINGS

[FIG. 1] A diagram showing a configuration of a plant according to a first embodiment of the present disclosure.
[FIG. 2] A diagram showing a configuration of a plant according to a second embodiment of the present disclosure.
[FIG. 3] A diagram showing a configuration of a plant according to a third embodiment of the present disclosure.
[FIG. 4] A diagram showing a configuration of a plant according to a fourth embodiment of the present disclosure.

### DESCRIPTION OF EMBODIMENTS

### <First embodiment>

Hereinafter, a plant according to a first embodiment of the present disclosure will be described based on the drawings.

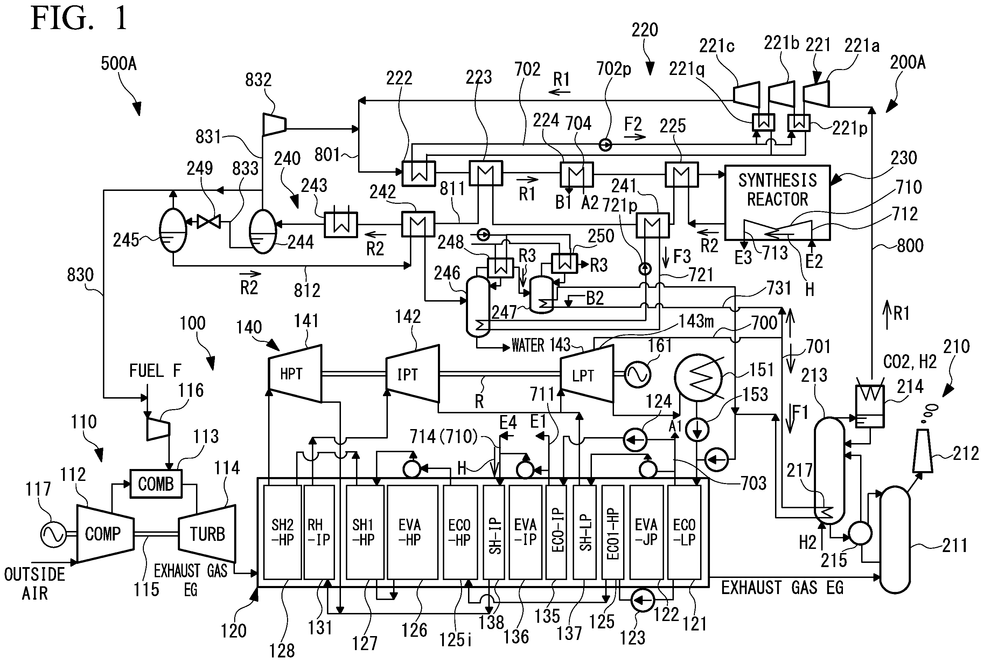

As shown in FIG. 1, a plant 500A includes a gas turbine combined cycle plant section 100 and a synthesis processing section 200A.

### (Configuration of gas turbine combined cycle plant section)

The gas turbine combined cycle plant section 100 includes a gas turbine (drive machine) 110, a heat recovery boiler 120, and a heat source usage facility 140.

The gas turbine 110 includes an air compressor 112, a combustor 113, and a turbine 114. The air compressor 112 compresses air taken in from the outside. The combustor 113 burns fuel F in the air compressed by the air compressor 112 to generate a combustion gas. The fuel F is compressed by a fuel compressor 116 and is supplied to the combustor 113. The turbine 114 is driven by a high-temperature and high-pressure combustion gas generated in the combustor 113. A turbine rotor of the turbine 114 and a compressor rotor of the air compressor 112 are connected to each other to constitute a gas turbine rotor 115. For example, a generator 117 is connected to the gas turbine rotor 115. An exhaust gas EG discharged from the turbine 114 is supplied to the heat recovery boiler 120.

The heat recovery boiler 120 generates steam by using the thermal energy of the exhaust gas EG discharged from the gas turbine 110. This heat recovery boiler 120 includes a low-pressure economizer (ECO-LP) 121, a low-pressure evaporator 122, an intermediate-pressure pump 124, a high-pressure pump 123, a first high-pressure economizer (ECO1-HP) 125, an intermediate-pressure economizer (ECO-IP) 135, an intermediate-pressure evaporator (EVA-IP) 136, an intermediate-pressure superheater (SHIP) 138, a low-pressure superheater (SH-LP) 137, a second high-pressure economizer (ECO-HP) 125i, a high-pressure evaporator (EVA-HP) 126, a first high-pressure superheater (SH1-HP) 127, a reheater (RH-IP) 131, and a second high-pressure superheater (SH2-HP) 128. Here, in the direction in which the exhaust gas EG flows through the heat recovery boiler 120, the side closer to the gas turbine 110 is defined as the upstream side, and the opposite side closer to a stack 212 is defined as the downstream side. The low-pressure economizer 121, the low-pressure evaporator 122, the first high-pressure economizer 125, the low-pressure superheater 137, the intermediate-pressure economizer 135, the intermediate-pressure evaporator 136, the intermediate-pressure superheater 138, the second high-pressure economizer 125i, the high-pressure evaporator 126, the first high-pressure superheater 127, the reheater 131, and the second high-pressure superheater 128 are arranged in this order from downstream to upstream inside the heat recovery boiler 120.

The low-pressure economizer 121 heats water supplied from a condenser 151 of the heat source usage facility 140.

The low-pressure evaporator 122 converts the water heated by the low-pressure economizer 121 into steam. The low-pressure evaporator 122 illustrated in this embodiment is a natural circulation boiler with a drum disposed on top (the same applies to the intermediate-pressure evaporator 136 and the high-pressure evaporator 126 below).

The intermediate-pressure pump 124 pressurizes the water heated by the low-pressure economizer 121 and supplies the water to the intermediate-pressure economizer 135.

The intermediate-pressure economizer 135 heats the water pressurized by the intermediate-pressure pump 124.

The intermediate-pressure evaporator 136 further heats the water heated by the intermediate-pressure economizer 135 to generate steam.

The high-pressure pump 123 pressurizes the water heated by the low-pressure economizer 121 and supplies the water to the first high-pressure economizer 125.

The first high-pressure economizer 125 heats the water pressurized by the high-pressure pump 123.

The second high-pressure economizer 125i further heats the high-pressure water heated by the first high-pressure economizer 125.

The high-pressure evaporator 126 heats the high-pressure water heated by the second high-pressure economizer 125i to generate steam.

The first high-pressure superheater 127 superheats the steam generated by the high-pressure evaporator 126. Furthermore, the high-pressure evaporator 126 is an evaporator having the highest pressure among the plurality of evaporators included in the heat recovery boiler 120, that is, an evaporator having the highest pressure among the low-pressure evaporator 122, the intermediate-pressure evaporator 136, and the high-pressure evaporator 126.

The second high-pressure superheater 128 further superheats the steam superheated by the first high-pressure superheater 127. The steam superheated by this second high-pressure superheater 128 is supplied to a high-pressure steam turbine 141 of the heat source usage facility 140.

The reheater 131 superheats the steam discharged from the high-pressure steam turbine 141 of the heat source usage facility 140. The steam superheated by the reheater 131 is supplied to an intermediate-pressure steam turbine (prime mover) 142 of the heat source usage facility 140.

The heat source usage facility 140 includes a high-pressure steam turbine 141, an intermediate-pressure steam turbine (prime mover) 142, a low-pressure steam turbine 143, a condenser 151, and a feed water pump 153.

The high-pressure steam turbine 141, the intermediate-pressure steam turbine 142, and the low-pressure steam turbine 143 are respectively driven by using the steam generated by the heat recovery boiler 120. A turbine rotor of the high-pressure steam turbine 141, a turbine rotor of the intermediate-pressure steam turbine 142, and a turbine rotor of the low-pressure steam turbine 143 are connected to each other to constitute one turbine rotor R. This turbine rotor R is connected to a generator 161.

The high-pressure steam turbine 141 is driven by the steam superheated by the second high-pressure superheater 128 of the heat recovery boiler 120. The intermediate-pressure steam turbine 142 is driven by the steam superheated by the reheater 131. The low-pressure steam turbine 143 is driven by the steam superheated by the low-pressure superheater 137 and the steam discharged from the intermediate-pressure steam turbine 142.

The condenser 151 returns the steam discharged from the low-pressure steam turbine 143 to water.

The feed water pump 153 returns the water in the condenser 151 to the heat recovery boiler 120. Specifically, the feed water pump 153 returns the water in the condenser 151 to the low-pressure economizer 121.

### (Configuration of synthesis processing section)

The synthesis processing section 200A includes a separation section 210, a preheating section 220, a synthesis reactor 230, and a post-processing section 240.

The separation section 210 separates some substances, containing a specific substance, from the exhaust gas EG discharged from the heat recovery boiler 120. In this embodiment, the separation section 210 separates carbon dioxide (CO₂) as a specific substance from the exhaust gas EG. The separation section 210 includes an absorption tower (absorption section) 211, the stack 212, a regeneration tower (recovery section) 213, and a cooler 214.

The absorption tower 211 absorbs carbon dioxide, which is a specific substance contained in the exhaust gas EG, using an absorbing liquid (absorbent). The absorbing liquid is supplied in droplet form to the absorption tower 211 and comes into contact with the exhaust gas EG in the absorption tower 211. In this embodiment, the absorbing liquid to be used may, for example, contain an amine compound. The absorbing liquid absorbs the carbon dioxide contained in the exhaust gas and falls to the bottom of the absorption tower 211. Here, as the absorbing liquid, it is preferable to use a phase separation type absorbing liquid which causes phase separation when absorbing carbon dioxide. The phase separation type absorbing liquid separates into a phase having a large amount of dissolved carbon dioxide and a phase having a small amount of dissolved carbon dioxide by absorbing carbon dioxide. The absorbing liquid having absorbed carbon dioxide is sent to the regeneration tower 213.

The stack 212 releases the remaining exhaust gas EG from which carbon dioxide has been absorbed (removed) by the absorbing liquid in the absorption tower 211 to the outside.

The regeneration tower 213 separates a carbon dioxide gas from the absorbing liquid that has absorbed carbon dioxide, thereby regenerating the absorbing liquid. Carbon dioxide moves from the liquid phase (absorbing liquid) to the gas phase in the regeneration tower 213. In this embodiment, hydrogen (H₂) is supplied to the regeneration tower 213 from the outside. Hydrogen is supplied to the bottom of the regeneration tower 213 where the absorbing liquid is stored. The partial pressure of carbon dioxide in the regeneration tower 213 is decreased by supplying hydrogen from the outside. By reducing the partial pressure of carbon dioxide in the regeneration tower 213, carbon dioxide moves from the liquid phase to the gas phase at a low temperature, and the absorbing liquid can be regenerated at a low temperature.

The regeneration tower 213 includes a heat exchanger 217 for heating the absorbing liquid in the regeneration tower 213. The heat exchanger 217 is supplied with a fluid F1 having a higher temperature than the absorbing liquid in the regeneration tower 213 from the outside. The absorbing liquid in the regeneration tower 213 is heated by the fluid F1 fed from the outside. In this embodiment, as the fluid F1, low-temperature steam (for example, about 60°C) extracted through an extraction pipe 700 from an intermediate stage 143m of the low-pressure steam turbine 143 is sent to the regeneration tower 213 through a low-temperature steam pipe 701. In the regeneration tower 213, low-temperature steam is sent through the low-temperature steam pipe 701 to heat the absorbing liquid that has absorbed carbon dioxide. Heating the absorbing liquid promotes the separation of carbon dioxide from the absorbing liquid.

The regeneration tower 213 circulates the absorbing liquid regenerated by separating carbon dioxide to the absorption tower 211 through a regeneration heat exchanger 215. Further, the regeneration tower 213 sends out a gas containing the carbon dioxide separated from the absorbing liquid and hydrogen supplied from the outside to the cooler 214.

The cooler 214 cools the gas containing carbon dioxide and hydrogen, recovers the absorbing liquid component contained in the gas containing carbon dioxide and hydrogen, and returns the gas to the regeneration tower 213. Further, the gas containing carbon dioxide and hydrogen from which the absorbing liquid components have been removed is sent as a raw material fluid R1 through a delivery pipe 800 to an intermediate cooling compressor 221 of the preheating section 220.

The preheating section 220 preheats the raw material fluid R1 before the fluid is fed to the synthesis reactor 230. The preheating section 220 includes an intermediate cooling compressor 221, a first preheater 222, a second preheater 223 (preheater, cooling section), a third preheater 224, and a fourth preheater 225.

The intermediate cooling compressor 221 compresses the raw material fluid R1 containing carbon dioxide and hydrogen sent from the separation section 210. In this embodiment, the intermediate cooling compressor 221 includes three-stage compressors 221a to 221c and intermediate coolers 221p and 221q. The raw material fluid R1 is compressed in stages by passing through three-stage compressors 221a to 221c in this order.

The intermediate coolers 221p and 221q are arranged between the first stage compressor 221a and the second stage compressor 221b and between the second stage compressor 221b and the third stage compressor 221c. The intermediate coolers 221p and 221q are connected to the first preheater 222 to be described later through a circulation pipe 702. The circulation pipe 702 circulates a circulation fluid F2 between the intermediate coolers 221p and 221q and the first preheater 222 by a pump 702p. The intermediate coolers 221p and 221q cool the raw material fluid R1 by the circulation fluid F2 with a decreased temperature by the first preheater 222 to be described later. The raw material fluid R1 which is compressed and cooled by the intermediate cooling compressor 221 is delivered to the first preheater 222 through a preheating pipe 801.

The preheating pipe 801 is provided between the intermediate cooling compressor 221 and the synthesis reactor 230. The preheating pipe 801 is disposed between the intermediate cooling compressor 221 and the synthesis reactor 230 to pass through the first preheater 222, the second preheater 223, the third preheater 224, and the fourth preheater 225 in this order.

The first preheater 222 preheats the raw material fluid R1 by the heat of the circulation fluid F2 with an increased temperature by cooling the raw material fluid R1 in the intermediate coolers 221p and 221q. The raw material fluid R1 which is preheated by the first preheater 222 is sent to the second preheater 223 through the preheating pipe 801.

The second preheater 223 preheats the raw material fluid R1 by using the exhaust heat of a crude fluid (fluid) R2 as a post-reaction fluid generated in a synthesis reactor 230 to be described later. The second preheater 223 preheats the raw material fluid R1 by using the exhaust heat of the crude fluid R2 between a first cooler 241 and a second cooler (heating section) 242 cooling the crude fluid R2. The raw material fluid R1 which is preheated by the second preheater 223 is sent to the third preheater 224 through the preheating pipe 801. At this time, in the second preheater 223, a part of the crude fluid R2 as the cooled post-reaction fluid begins to condense. Therefore, the condensation heat can be effectively used to preheat the raw material fluid R1. In this embodiment, the raw material fluid R1 is mainly composed of carbon dioxide and hydrogen, and has a low boiling point. On the other hand, the crude fluid R2 produced as a post-reaction fluid by the chemical reaction in the synthesis reactor 230 contains a large amount of methanol and water, and has a higher boiling point than the raw material fluid R1. While a part of the crude fluid R2 as a post-reaction fluid is condensed, the raw material fluid R1 maintains a gas phase state and does not change phase, and the condensation heat of the crude fluid R2 as a post-reaction fluid can be effectively used to efficiently heat the raw material fluid R1. In this way, although the fluid is the same fluid before and after the chemical reaction on the high temperature side and the low temperature side of the second preheater 223, the components change due to the chemical reaction in the synthesis reactor 230, so that the boiling point increases and the gas phase on the low temperature side can be heated using the condensation heat on the high temperature side.

The third preheater 224 is connected to the low-pressure economizer 121 through pipes 703 and 704. An end (A1 of FIG. 1) of the pipe 703 on the side of the low-pressure economizer 121 is connected to one end (A2 of FIG. 1) of the pipe 704 on the side of the third preheater 224. Further, the other end (B1 of FIG. 1) of the pipe 704 on the side of the third preheater 224 is connected to a heating pipe 731 (B2 of FIG. 1) connected to a rectification tower 247 to be described later. The third preheater 224 preheats the raw material fluid R1 by the water heated by the low-pressure economizer 121. The raw material fluid R1 which is preheated by the third preheater 224 is sent to the fourth preheater 225 through the preheating pipe 801.

The fourth preheater 225 preheats the raw material fluid R1 by using the exhaust heat of the crude fluid R2 as a post-reaction fluid generated in the synthesis reactor 230 to be described later. The fourth preheater 225 preheats the raw material fluid R1 by the exhaust heat of the crude fluid R2 delivered from the synthesis reactor 230. The raw material fluid R1 which is preheated by the fourth preheater 225 is sent to the synthesis reactor 230 through the preheating pipe 801.

In this way, the raw material fluid R1 is successively preheated to a high temperature, for example, of 250°C by passing through the intermediate cooling compressor 221, the first preheater 222, the second preheater 223, the third preheater 224, and the fourth preheater 225.

The synthesis reactor 230 causes a chemical reaction of the raw material fluid R1 to produce the crude fluid R2 as a post-reaction fluid. In this embodiment, the synthesis reactor 230 causes a chemical reaction represented by the following formula (1) in the raw material fluid R1 containing carbon dioxide and hydrogen as specific substances, thereby obtaining methanol (CH₃OH) and water (H₂O) as a compound.

CO₂+3H₂→CH₃OH+H₂O ... (1)

During the chemical reaction of the above formula (1), the amount of enthalpy change is ΔH=-49.4 kJ/mol, and heat is generated. In other words, the chemical reaction in the synthesis reactor 230 is an exothermic chemical reaction accompanied by heat generation.

The synthesis reactor 230 is connected to a heat medium supply line 710 that recovers heat generated by the exothermic chemical reaction in the synthesis reactor 230. The heat medium supply line 710 is connected to the intermediate-pressure economizer 135 through a pipe 711. An end (E1 of FIG. 1) of the pipe 711 on the side of the intermediate-pressure economizer 135 is connected to one end 712 (E2 of FIG. 1) of the heat medium supply line 710. The other end 713 (E3 of FIG. 1) of the heat medium supply line 710 is connected to a pipe 714 (E4 of FIG. 1) on the side of the intermediate-pressure superheater 138. The intermediate-pressure water at, for example, about 240°C is supplied to the synthesis reactor 230 as the heat medium fluid H from the intermediate-pressure economizer 135 through the heat medium supply line 710.

Meanwhile, in the chemical reaction in the synthesis reactor 230, the activity of the chemical substances increases under high temperature conditions, while the equilibrium shifts in the direction of promoting the reverse reaction according to Le Chatelier's law. In other words, if the temperature becomes too high during the exothermic reaction in the synthesis reactor 230, the reaction of the produced compound back to the raw material is promoted. Therefore, there is an optimum temperature for the chemical reaction in the synthesis reactor 230.

When the intermediate-pressure water is supplied from the intermediate-pressure economizer 135 to the heat medium supply line 710 of the synthesis reactor 230 as the heat medium fluid H, the water in the heat medium supply line 710 is heated and evaporated by the reaction heat accompanying the exothermic chemical reaction in the synthesis reactor 230. In the heat medium supply line 710, water as the heat medium fluid H evaporates while maintaining the temperature close to the saturation temperature, thereby recovering a large amount of heat generated by the exothermic chemical reaction. In this way, the exothermic chemical reaction in the synthesis reactor 230 is performed while efficiently recovering the reaction heat and minimizing temperature changes.

Steam generated by evaporation of water as the heat medium fluid H in the heat medium supply line 710 is supplied to the intermediate-pressure superheater 138 through the other end 713. The steam supplied to the intermediate-pressure superheater 138 is supplied to the intermediate-pressure steam turbine 142 through the reheater 131. In this way, the reaction heat from the exothermic chemical reaction in the synthesis reactor 230 is recovered to evaporate water as the heat medium fluid H, and the steam obtained by evaporating water as the heat medium fluid H drives the intermediate-pressure steam turbine 142 of the heat source usage facility 140.

The chemical reaction of the above formula (1) in the synthesis reactor 230 produces the crude fluid R2 containing methanol (CH₃OH) and water (H₂O) as the compound. Here, the temperature of the crude fluid R2 is increased by the exothermic chemical reaction, and is higher than the temperature of the raw material fluid R1. The crude fluid R2 is delivered from the synthesis reactor 230 to the post-processing section 240 through a crude fluid circulation line 811.

The post-processing section 240 includes the first cooler 241, the second cooler 242, a third cooler 243, a first separator (separator) 244, a second separator (separator) 245, a distillation tower (distillation section) 246, and the rectification tower 247. The crude fluid circulation line 811 connects the synthesis reactor 230 to the post-processing section 240. The crude fluid circulation line 811 is disposed between the synthesis reactor 230 and the post-processing section 240 to pass through the first cooler 241, the second cooler 242, and the third cooler 243 in this order. Further, the crude fluid circulation line 811 is disposed between the synthesis reactor 230 and the first cooler 241 to pass through the fourth preheater 225. The crude fluid circulation line 811 is disposed between the first cooler 241 and the second cooler 242 to pass through the second preheater 223.

The temperature of the crude fluid R2 which is delivered from the synthesis reactor 230 to the crude fluid circulation line 811 is decreased by preheating the raw material fluid R1 in the fourth preheater 225. The crude fluid R2 with a decreased temperature is sent to the first cooler 241.

The first cooler 241 is connected to a distillation tower 246 to be described later through the circulation pipe 721. The circulation pipe 721 circulates a circulation fluid F3 between the first cooler 241 and the distillation tower 246 by a pump 721p. The first cooler 241 cools the crude fluid R2 by the circulation fluid F3 with a decreased temperature by the distillation tower 246 to be described later. The cooled crude fluid R2 is delivered to the second preheater 223 through the crude fluid circulation line 811.

The temperature of the crude fluid R2 which is delivered to the second preheater 223 is decreased by preheating the raw material fluid R1. The crude fluid R2 with a decreased temperature is sent to the second cooler 242 through the crude fluid circulation line 811.

A crude fluid cooling line 812 which connects the second separator 245 and the distillation tower 246 to be described later passes through the second cooler 242. The second cooler 242 cools the crude fluid R2 by the crude fluid R2 passing through the crude fluid cooling line 812. The cooled crude fluid R2 is sent to the third cooler 243 through the crude fluid circulation line 811.

In the third cooler 243, the crude fluid R2 is further cooled by an appropriate cooling heat source. The cooled crude fluid R2 is sent to the first separator 244 through the crude fluid circulation line 811.

The crude fluid R2 delivered from the synthesis reactor 230 to the crude fluid circulation line 811 is sequentially cooled by passing through the fourth preheater 225, the first cooler 241, the second preheater 223, the second cooler 242, and the third cooler 243. As the crude fluid R2 is cooled, the water having a higher boiling point in the methanol and water contained in the crude fluid R2 starts to condense first, for example, near the second preheater 223.

The first separator 244 separates the crude fluid R2 fed through the crude fluid circulation line 811 into a gas phase and a liquid phase. A part of the gas phase (mainly hydrogen and carbon dioxide) of the crude fluid R2 which is not liquefied until reaching the first separator 244 and is separated by the first separator 244 is supplied to the fuel compressor 116 through the circulation pipe 830 as a part of the fuel F. Further, another part of the gas phase of the crude fluid R2 separated by the first separator 244 is compressed by a compressor 832 through a recycle pipe 831 and then is fed to the preheating pipe 801.

The first separator 244 and the second separator 245 are connected to each other through a connection pipe 833. The liquid phase of the crude fluid R2 separated in the first separator 244 is sent to the second separator 245 through the connection pipe 833. The connection pipe 833 is provided with an expansion valve (expansion section) 249. The crude fluid R2 which is delivered from the first separator 244 is expanded by the expansion valve 249 to be depressurized.

The depressurized crude fluid R2 is further separated into a gas phase and a liquid phase in the second separator 245 and then sent to the distillation tower 246 through the crude fluid cooling line 812.

The crude fluid cooling line 812 is disposed between the second separator 245 and the distillation tower 246 to pass through the second cooler 242. The crude fluid R2 (liquid phase) which is delivered from the second separator 245 to the crude fluid cooling line 812 exchanges heat with the crude fluid R2 passing through the crude fluid circulation line 811 in the second cooler 242. In the second cooler 242, the crude fluid R2 passing through the crude fluid circulation line 811 is partially condensed to thereby generate condensation heat. On the other hand, the crude fluid R2 passing through the crude fluid cooling line 812 is depressurized by passing through the expansion valve 249, and therefore the boiling point is lowered. Therefore, in the second cooler 242, when the crude fluid R2 passing through the crude fluid cooling line 812 is heated by the condensation heat, vaporization of the crude fluid R2 passing through the crude fluid cooling line 812 is promoted.

The distillation tower 246 distills the crude fluid R2 and extracts methanol, which has a boiling point lower than that of water, as a compound. In the distillation tower 246, the crude fluid R2 fed through the crude fluid cooling line 812 exchanges heat with the circulation fluid F3 passing through the circulation pipe 721. The temperature of the circulation fluid F3 is increased by cooling the crude fluid R2 in the first cooler 241. The distillation tower 246 heats the crude fluid R2 with the heat of the circulation fluid F3 passing through the circulation pipe 721, and evaporates only the synthesized methanol as the product fluid R3. The evaporated methanol (product fluid R3) is cooled in a distillation tower top cooler 248, and the condensed components are separated and returned to the distillation tower 246, and then fed to the rectification tower 247. In the distillation tower 246, only water remains as the product fluid R3, that is, methanol is extracted from the crude fluid R2. The water remaining in the distillation tower 246 is discharged to the outside.

The rectification tower 247 rectifies the product fluid R3 to remove impurities such as water. The product fluid R3 fed to the rectification tower 247 is heated by the steam passing through the heating pipe 731. The heating pipe 731 is provided by branching off from an extraction pipe 700 that extracts low-temperature steam from an intermediate stage 143m of the low-pressure steam turbine 143. The product fluid R3 in the distillation tower 247 is heated by the fluid F1 (low-temperature steam) passing through the heating pipe 731, and only methanol as the product fluid R3 is distilled. The product fluid R3 passing through the rectification tower 247 is post-cooled in a rectification tower top cooler 250, and the condensed components are separated and returned to the rectification tower 247, and then supplied to the outside.

### (Operation and effect)

In the above-described plant 500A, the synthesis reactor 230 generates an exothermic chemical reaction when producing the crude fluid R2 and the product fluid R3 using the raw material fluid R1. The heat medium supply line 710 recovers heat generated by the exothermic chemical reaction in the synthesis reactor 230. Specifically, the reaction heat from the exothermic chemical reaction in the synthesis reactor 230 is recovered to evaporate water as the heat medium fluid H to obtain steam. The plant 500A drives the intermediate-pressure steam turbine 142 of the heat source usage facility 140 by the steam obtained in this way. That is, the heat medium fluid H that recovers heat by the heat medium supply line 710 is used as a heat source of the heat source usage facility 140.

In this way, thermal energy can be efficiently used when producing the product fluid R3 as a compound by effectively using the heat generated by the exothermic chemical reaction in the synthesis reactor 230 as a heat source for the heat source usage facility 140.

Further, the heat medium supply line 710 evaporates the heat medium fluid H in the synthesis reactor 230 to recover heat generated by the exothermic chemical reaction.

By such evaporation of the heat medium fluid H, the heat generated by the exothermic chemical reaction at a constant temperature in the synthesis reactor 230 can be efficiently recovered.

Furthermore, the heat source usage facility 140 further includes the intermediate-pressure steam turbine 142 that is driven by the heat medium fluid H that has passed through the heat medium supply line 710.

By using the heat medium fluid H that has passed through the heat medium supply line 710 as a heat source in this manner, the intermediate-pressure steam turbine 142 can be driven efficiently.

Further, the intermediate-pressure steam turbine 142 is driven by the expansion of the heat medium fluid H.

Accordingly, the intermediate-pressure steam turbine 142 can be driven efficiently by the heat medium fluid H.

Furthermore, since the heat of the heat medium fluid H with a decreased temperature by expanding through the intermediate-pressure steam turbine 142 is used for producing, preheating, and evaporating the raw material fluid R1, the thermal energy can be effectively used and the plant 500A can be operated efficiently. That is, as described above, since the heat medium fluid H, which is evaporated by recovering the heat generated by the exothermic chemical reaction, is used to drive the intermediate-pressure steam turbine 142 and is used to produce, preheat, and evaporate the raw material fluid R1 after the temperature is decreased, the raw material fluid R1 can be produced, preheated, and evaporated by the low-temperature heat medium fluid H compared to the case where the heat generated by the exothermic chemical reaction is directly used for producing, preheating, and evaporating the raw material fluid R1, and thermal energy can be more effectively used.

Further, in the plant 500A, heat extracted from the intermediate-pressure steam turbine 142 is used to separate a specific substance from the absorbent in the regeneration tower 213. Accordingly, the specific substance can be efficiently separated from the absorbent in the regeneration tower 213 by effectively using the heat extracted from the intermediate-pressure steam turbine 142.

Furthermore, the absorbent is a phase-separation type absorbing liquid. Accordingly, it is possible to separate a specific substance from the absorbent by effectively using the relatively low-temperature heat generated in large quantities within the plant 500A. Thus, the efficiency of the plant 500A can be improved.

Further, in the plant 500A, the liquid phase of the crude fluid R2 on the downstream side of the first separator 244 and the second separator 245 is heated by using the condensation heat generated when a part of the crude fluid R2 is condensed in the second preheater 223 on the upstream side of the first separator 244 and the second separator 245, and at least a part of the crude fluid R2 is vaporized. Thus, since the vaporization which requires a large amount of heat can be performed using the condensation heat which generates a large amount of heat, it is possible to efficiently preheat the crude fluid R2 before the crude fluid R2 is supplied to the distillation tower 246.

Furthermore, in the plant 500A, the pressure of the crude fluid R2 is decreased by expanding the crude fluid R2 in the expansion valve 249. Accordingly, the crude fluid R2 on the high temperature side of the second cooler 242, that is, the upstream side of the first separator 244 and the second separator 245 has a higher pressure than the crude fluid R2 on the low temperature side of the second cooler 242, that is, on the downstream side of the first separator 244 and the second separator 245, the temperature at which the crude fluid R2 on the high temperature side of the second cooler 242 is condensed can be made higher than the temperature at which the crude fluid R2 on the low temperature side of the second cooler 242 is vaporized, and the condensation heat generated in large quantities in the second cooler 242 can be used to perform vaporization which requires a large amount of heat.

Further, in the plant 500A, hydrogen and carbon dioxide contained in the exhaust gas EG are used as the raw material fluid R1, and the crude fluid R2 and the product fluid R3 are obtained. Therefore, it is possible to reduce the amount of carbon dioxide discharged in the plant 500A.

Furthermore, in the plant 500A, the crude fluid R2 and the product fluid R3 are obtained from the exhaust gas EG, which is a gas containing carbon dioxide, by supplying hydrogen from the outside. Therefore, since it is only necessary to supply hydrogen from the outside, it is possible to easily suppress the amount of carbon dioxide discharged in the plant 500A.

### <Second embodiment>

Next, a second embodiment of the present disclosure will be described based on the drawings. The plant of the second embodiment is different from the plant of the first embodiment in that a heat pump is provided. Therefore, the same parts as those in the first embodiment described above are denoted by the same reference numerals and will not be described repeatedly.

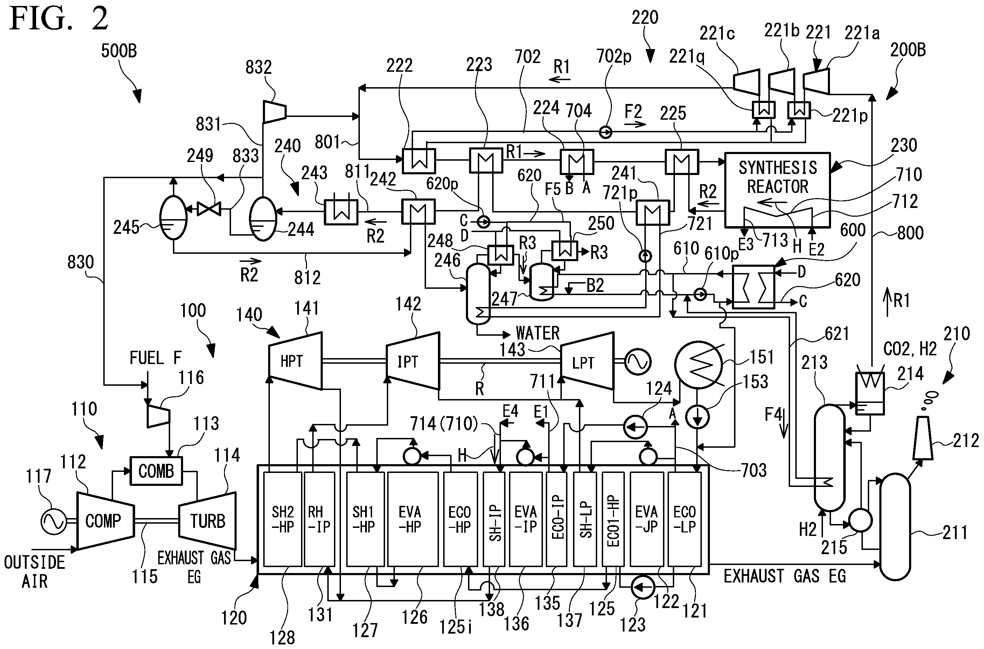

As shown in FIG. 2, a plant 500B of the second embodiment includes the gas turbine combined cycle plant section 100 and a synthesis processing section 200B.

In the second embodiment, the synthesis processing section 200B does not include the extraction pipe 700 connected to the intermediate stage 143m of the low-pressure steam turbine 143, but includes a heat pump 600 instead of the extraction pipe 700.

The heat pump 600 includes a first side pipe 610, a second side pipe 620, a pump 610p, and a pump 620p. The first side pipe 610 is connected to the rectification tower 247. The pump 610p is provided in the first side pipe 610, and circulates a circulation fluid F4 in the first side pipe 610 between the heat pump 600 and the rectification tower 247. The second side pipe 620 is connected to the distillation tower top cooler 248 and the rectification tower top cooler 250. The pump 620p is provided in the second side pipe 620, and circulates a circulation fluid F5 in the second side pipe 620 between the heat pump 600, the distillation tower top cooler 248, and the rectification tower top cooler 250. A circulation fluid pipe 621 that supplies the circulation fluid F4 to the heat exchanger in the regeneration tower 213 is connected to the first side pipe 610 of the second embodiment. Furthermore, the circulation fluid F4 and the circulation fluid F5 may be, for example, water.

The heat pump 600 recovers the exhaust heat of the distillation tower top cooler 248 and the rectification tower top cooler 250 by the second side pipe 620 and the pump 620p. Then, the heat pump 600 raises the temperature of the circulation fluid F4 in the first side pipe 610 by the recovered exhaust heat. A part of the circulation fluid F4 with an increased temperature is fed to the regeneration tower 213 through the circulation fluid pipe 621. In the regeneration tower 213, the absorbing liquid that has absorbed carbon dioxide is heated by the low-temperature steam fed through the circulation fluid pipe 621, and the heating of the absorbing liquid promotes the separation of carbon dioxide from the absorbing liquid. Further, the remainder of the circulation fluid F4 with an increased temperature is sent to the heat exchanger in the distillation tower 247, and the product fluid R3 in the distillation tower 247 is heated, thereby distilling the product fluid R3 and removing impurities such as water.

In the above-described plant 500B, the exhaust heat of the distillation tower top cooler 248 and the rectification tower top cooler 250 recovered by the heat pump 600 is used for the distillation in the rectification tower 247 and the separation of the specific substance from the absorbent in the regeneration tower 213. Accordingly, it is possible to efficiently perform the distillation in rectification tower 247 and the separation of the specific substance from the absorbent in the regeneration tower 213 by effectively using the exhaust heat with a decreased temperature of the distillation tower top cooler 248 and the rectification tower top cooler 250.

Further, in the plant 500B, as in the first embodiment, it is possible to efficiently use thermal energy when producing the product fluid R3 as a compound by effectively using the heat generated by the exothermic chemical reaction of the synthesis reactor 230 as a heat source of the heat source usage facility 140.

### (Modified examples of first and second embodiments)

In the first embodiment, the extraction pipe 700 is provided, and in the second embodiment, the heat pump 600 is provided. However, the present invention is not limited thereto.

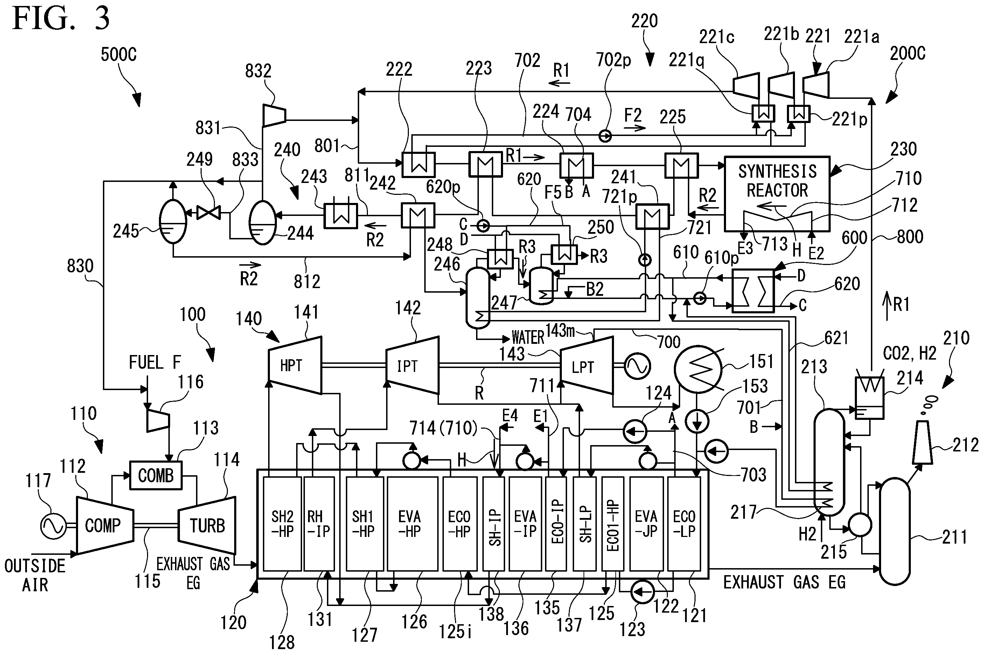

For example, as in the modified example shown in FIG. 3, a synthesis processing section 200C of a plant 500C may include both the extraction pipe 700 and the heat pump 600.

In the above-described plant 500C, it is possible to use both the heat extracted from the intermediate-pressure steam turbine 142 and the exhaust heat of the distillation tower top cooler 248 and the rectification tower top cooler 250 recovered by the heat pump 600 for the separation of the specific substance from the absorbent in the regeneration tower 213. Accordingly, it is possible to more efficiently separate the specific substance from the absorbent in the regeneration tower 213.

### <Third embodiment>

Next, a plant according to a third embodiment of the present disclosure will be described based on the drawings. The plant of the third embodiment is different from the plant of the first embodiment described above in that the crude fluid and the product fluid can be stored. Therefore, the same parts as those in the first embodiment described above are denoted by the same reference numerals and will not be described repeatedly.

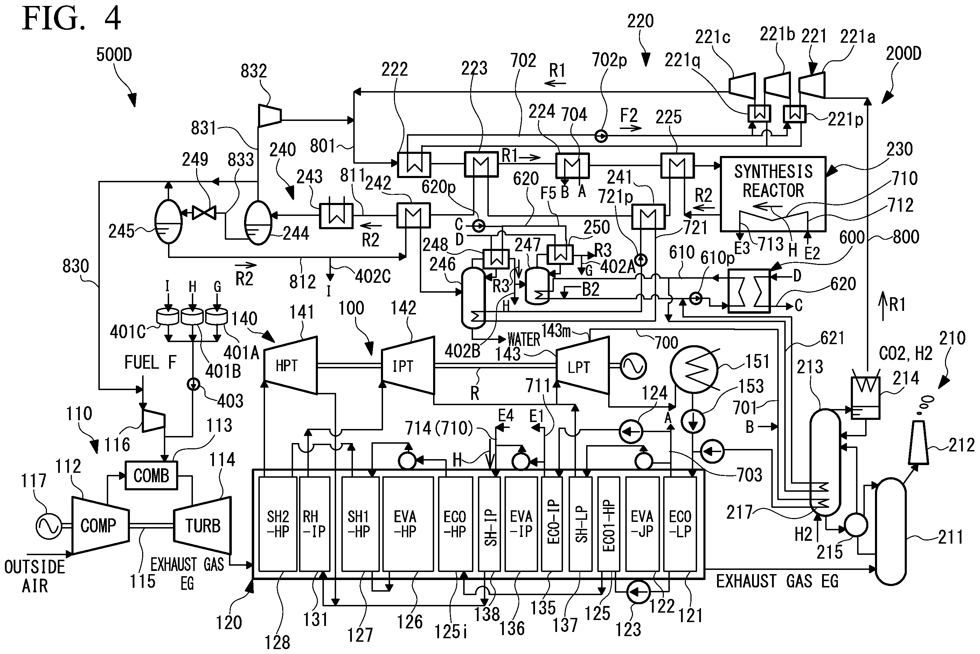

As shown in FIG. 4, a plant 500D of the third embodiment includes the gas turbine combined cycle plant section 100 and a synthesis processing section 200D. The synthesis processing section 200D of the third embodiment includes storage units 401A to 401C.

The storage unit 401A is connected to the outlet side of the rectification tower top cooler 250 through a product fluid delivery pipe 402A. The product fluid delivery pipe 402A extracts the product fluid R3 after the distillation of the distillation section 246 and the rectification of the rectification tower top cooler 250. The storage unit 401A stores the product fluid R3 having passed through the rectification tower 247.

The storage unit 401B is connected to the outlet side of the distillation tower top cooler 248 through a product fluid delivery pipe 402B. The product fluid delivery pipe 402B extracts the product fluid R3 after the distillation of the distillation section 246. The storage unit 401B stores the product fluid R3 having passed through the distillation tower 246. In other words, the storage unit 401B stores the product fluid R3 passing through the distillation tower 246 but not passing through the rectification tower 247.

The storage unit 401C is connected to the crude fluid cooling line 812 through a crude fluid delivery pipe 402C. The crude fluid delivery pipe 402C extracts the crude fluid R2 from between the synthesis reactor 230 and the distillation section 246. The storage unit 401C stores the crude fluid R2 flowing through the crude fluid cooling line 812.

The crude fluid R2 and the product fluid R3 stored in the storage units 401A to 401C are sent to the combustor 113 by a supply pump 403 and are used as the fuel of the gas turbine 110. Here, when the heat available in the distillation section 246 is large, the ratio of the flow rate of the product fluid R3 extracted from the product fluid delivery pipes 402A and 402B to the sum of the flow rate of the product fluid R3 extracted from the product fluid delivery pipes 402A and 402B and the flow rate of the crude fluid R2 extracted from the crude fluid delivery pipe 202C is increased compared to when the heat available in the distillation section 246 is small. When the heat available in the distillation section 246 is small, the ratio of the flow rate of the product fluid R3 extracted from the product fluid delivery pipes 402A and 402B to the sum of the flow rate of the product fluid R3 extracted from the product fluid delivery pipes 402A and 402B and the flow rate of the crude fluid R2 extracted from the crude fluid delivery pipe 202C is decreased compared to when the heat available in the distillation section 246 is large.

In this way, it is possible to effectively use the energy in the plant 500D by using the crude fluid R2 or the product fluid R3 as the fuel of the gas turbine 110. As a result, it is possible to suppress the specific substance contained in the raw material fluid from leaking out of the plant 500D.

Further, since the storage units 401A to 401C storing the crude fluid R2 and the product fluid R3 are provided, the crude fluid R2 or the product fluid R3 can be used as the fuel of the gas turbine 110 if necessary.

Here, the gas turbine 110 has low efficiency at partial load, and generates a large amount of waste heat relative to the obtained power or electricity. During periods when the demand for power such as electricity is low, the crude fluid R2 or the product fluid R3 is stored in the storage units 401A to 401C by effectively using the exhaust heat, and during periods when the demand for power such as electricity is high, the crude fluid R2 and the product fluid R3 stored in the storage units 401A to 401C are used, thereby generating power or electricity according to the demand for power or electricity.

Further, it is possible to suppress the amount of carbon dioxide discharged from the plant 500D by consuming the crude fluid R2 and the product fluid R3 that are obtained using carbon dioxide, contained in the exhaust gas EG as a raw material, as the fuel.

As described above, in the plant 500D, (1) an absorbing liquid that recovers carbon dioxide from the exhaust gas of the gas turbine 110 and hydrogen H2 are supplied to the regeneration tower 213, (2) a mixed gas of carbon dioxide and hydrogen is extracted and sent to the synthesis reactor 230 as the raw material fluid R1, (3) the compound, that is, the crude fluid R2 containing methanol is synthesized in the synthesis reactor 230, and (4) the crude fluid R2 or the product fluid R3 obtained by distilling the crude fluid R2 is used as the fuel of the gas turbine 110.

Thus, carbon is circulated as carbon dioxide and methanol within the plant 500D through the gas turbine, regenerator, synthesis reactor, and gas turbine in that order, thereby generating electricity by supplying hydrogen from the outside while suppressing the release of carbon dioxide to the outside. In particular, when hydrogen derived from renewable energy sources such as solar cells, wind power, and geothermal power and obtained by electrolyzing water using electricity generated from renewable energy sources is used as the hydrogen, the energy produced by renewable energy sources can be stored as a compound, in this example, methanol while reducing the amount of carbon dioxide released into the atmosphere, and the compound can be used as fuel when electricity demand is high.

Further, since the fuel can be stored as a liquid compound in this way, the fuel can be stored more easily in smaller storage tanks than hydrogen, and energy storage in a small-scale plant with low equipment costs can be realized.

Further, when the unstable output of renewable energy is high or the demand for electricity is low, the compound can be stored, and when the output of renewable energy is low or the demand for electricity is high, the stored compound can be used as fuel to generate electricity. Accordingly, it possible to adjust to fluctuations in output from renewable energy sources, which have unstable output, as well as fluctuations in electricity demand.

Furthermore, the heat required for distillation can be saved and the efficiency of the plant 500D can be increased by using the crude fluid R2 before distillation as fuel. Further, in the crude fluid R2, the product fluid R3 on the upstream side of the rectification tower 247, and the product fluid R3 on the downstream side of the rectification tower 247, the crude fluid R2 has the lowest concentration of the compound, the product fluid R3 on the upstream side of the rectification tower 247 has a low concentration of the compound, and the product fluid R3 on the downstream side of the rectification tower 247 has the highest concentration of the compound. Fluids with higher compound concentrations require more heat to purify. Therefore, it is effective to generate the crude fluid R2 and the product fluid R3 with different concentrations of the compound depending on the available heat. That is, if the product fluid R3 having a high concentration of the compound is synthesized in large quantities when the available heat is large and the crude fluid R2 having a low concentration of the compound is synthesized in large quantities when the available heat is small, it is possible to effectively synthesize the crude fluid R2 and the product fluid R3 having different concentrations of compounds by using the available heat with high efficiency.

### (Other embodiments)

Although the embodiments of the present disclosure have been described in detail above with reference to the drawings, the specific configuration is not limited to this embodiment, and design changes and the like that do not deviate from the gist of the present disclosure are also included.

For example, in the above-described embodiments, although it has been described that the crude fluid R2 containing methanol and water is obtained from the raw material fluid R1 containing hydrogen and carbon dioxide and methanol as a compound is produced as the product fluid R3, the present invention is not limited thereto. For example, the crude fluid R2 containing ethanol (C₂H₅OH) and water can be obtained from the raw material fluid R1 containing hydrogen and carbon dioxide, and ethanol can be obtained as the product fluid R3. Further, the crude fluid R2 containing methane (CH₄) and water can be obtained from the raw material fluid R1 containing hydrogen and carbon dioxide, and methane can be obtained as the product fluid R3.

Further, the raw material fluid R1 containing hydrogen and carbon monoxide can also be used. In this case, the crude fluid R2 containing methanol can be obtained from the raw material fluid R1 containing hydrogen and carbon monoxide, and methanol can be obtained as the product fluid R3. Further, the crude fluid R2 containing dimethyl ether (CH₃OCH₃) and water can be obtained from the raw material fluid R1 containing hydrogen and carbon monoxide, and dimethyl ether can be obtained as the product fluid R3. From the raw material fluid R1 containing hydrogen and carbon monoxide, the crude fluid R2 containing hydrocarbon (CH₂) and water can be obtained, and dimethyl ether can be obtained as the product fluid R3.

Further, the raw material fluid R1 containing nitrogen (N) and hydrogen can also be used. In this case, the crude fluid R2 containing ammonia (NH₃) can be obtained from the raw material fluid R1 containing hydrogen and nitrogen, and ammonia can be obtained as the product fluid R3. Accordingly, it is possible to suppress the amount of nitrogen discharged from the plant.

Further, in the above embodiments and modified examples, although it has been described that the water obtained from the intermediate-pressure economizer 135 is used as the heat medium fluid H, the water as the heat medium fluid H may be obtained from other than the intermediate-pressure economizer 135.

Further, as the heat medium fluid H, in addition to water, for example, carbon dioxide, argon, ammonia, HFC-245fa (refrigerant), HFO-1233zd (refrigerant), HCFO-1224yd (refrigerant), pentane, hexane, cyclohexane, heptane, toluene, and the like can be used.

Further, in the above embodiments and modified examples, although a case has been described in which the drive machine is the gas turbine and the prime mover is the steam turbine, other than these, a boiler, a reciprocating internal combustion engine, a solid oxide fuel cell (SOFC), and the like can also be used as the drive machine. Further, as the prime mover, an organic Rankine cycle, a Stirling engine, a reciprocating steam engine, and the like may also be employed.

Further, in the above embodiments and modified examples, although the expansion valve has been described as the example of the expansion section 249, instead of the expansion valve, a turbine or a reciprocating expander equipped with a cylinder and a piston may be employed to reduce the pressure of the post-reaction fluid and simultaneously recover power.

### <Appendix>

The plants 500A to 500D described in each embodiment can be understood, for example, as below.
(1) The plants 500A to 500D according to Aspect 1 includes: the synthesis reactor 230 that causes an exothermic chemical reaction of the raw material fluid R1 containing a specific substance to produce the post-reaction fluids R2 and R3; the heat medium supply line 710 that recovers heat generated by the exothermic chemical reaction in the synthesis reactor 230; and the heat source usage facility 140 that uses the heat medium fluid H which has been recovered heat in the heat medium supply line 710 as a heat source.

Examples of the specific substance include carbon dioxide, carbon monoxide, and nitrogen.

Examples of the raw material fluid R1 include those containing hydrogen in addition to the specific substance.

Examples of the post-reaction fluids R2 and R3 include methanol, ethanol, dimethyl ether, hydrocarbons, methane, ammonia, and fluids containing at least one of these and water.

Examples of the heat medium fluid H include water, carbon dioxide, argon, ammonia, HFC-245fa, HFO-1233zd, HCFO-1224yd, pentane, hexane, cyclohexane, heptane, and toluene.

In the plants 500A to 500D, the synthesis reactor 230 causes an exothermic chemical reaction when producing the post-reaction fluids R2 and R3 using the raw material fluid R1. The heat medium supply line 710 recovers the heat generated by the exothermic chemical reaction in the synthesis reactor 230. The heat medium fluid H that recovers heat in the heat medium supply line 710 is used as the heat source of the heat source usage facility 140. In this way, it is possible to effectively use thermal energy when producing the post-reaction fluids R2 and R3 as a compound by efficiently using the heat generated by the exothermic chemical reaction of the synthesis reactor 230 as the heat source of the heat source usage facility 140.

(2) The plants 500A to 500D according to Aspect 2 are the plants 500A to 500D of (1), wherein the heat medium supply line 710 evaporates the heat medium fluid H to recover the heat generated by the exothermic chemical reaction.

Accordingly, the heat generated by the exothermic chemical reaction at a constant temperature can be efficiently recovered by the evaporation of the heat medium fluid H.

(3) The plants 500A to 500D according to Aspect 3 are the plants 500A to 500D of (1) or (2), wherein the heat source usage facility 140 further includes the prime mover 142 that is driven by using the heat medium fluid H having passed through the heat medium supply line 710.

Accordingly, it is possible to efficiently drive the prime mover 142 by using the heat medium fluid H from which heat has been recovered by the heat medium supply line 710 as a heat source.

(4) The plants 500A to 500D according to Aspect 4 are the plants 500A to 500D of (3), wherein the prime mover 142 is driven by the expansion of the heat medium fluid H.

Accordingly, it is possible to efficiently drive the prime mover 142 by expanding the heat medium fluid H.

(5) The plants 500A to 500D according to Aspect 5 are the plants 500A to 500D of (4), wherein the heat of the heat medium fluid H with a decreased temperature by expanding through the prime mover 142 is used for at least one of the production of the raw material fluid R1, or preheat of the raw material fluid R1, or evaporation of the raw material fluid R1 or the distillation of the post-reaction fluids R2 and R3.

Accordingly, it is possible to efficiently drive the plant 500A by effectively using thermal energy.

(6) The plants 500A to 500D according to Aspect 6 are the plants 500A to 500D of any one of (3) to (5), further including: the absorption section 211 that absorbs the specific substance contained in the raw material fluid R1 by an absorbent; and the recovery section 213 that separates and recovers the specific substance from the absorbent, wherein the recovery section 213 separates the specific substance from the absorbent by performing heating using the heat extracted from the prime mover 142.

Accordingly, it is possible to efficiently separate a specific substance from the absorbent in the recovery section 213 by effectively using the heat extracted from the prime mover 142.

(7) The plants 500A to 500D according to Aspect 7 are the plants 500A to 500D of (6), wherein the absorbent is a phase separation type absorbing liquid.

Accordingly, since the absorbent is a phase separation type absorbing liquid, it is possible to separate a specific substance from the absorbent by effectively using the relatively low-temperature heat generated in the plant.

(8) The plants 500A to 500D according to Aspect 8 are the plants 500A to 500D of any one of (1) to (7), further including: the cooler 214 that cools the post-reaction fluid R2 and condenses a part of the post-reaction fluid; the separators 244 and 245 that separate a liquid phase of the post-reaction fluid R2 from the post-reaction fluid R2 cooled by the cooler 214; the heating section 242 that heats the liquid phase of the post-reaction fluid R2; and the distillation section 246 that distills the liquid phase of the post-reaction fluid R2 heated by the heating section 242, wherein the heating section 242 heats the liquid phase of the post-reaction fluid R2 by using the exhaust heat of the cooler 214 and vaporizes at least a part of the liquid phase.

Accordingly, since the liquid phase of the post-reaction fluid R2 is heated by using the exhaust heat of the cooler 214 to vaporize at least a part of the liquid phase, it is possible to efficiently preheat the post-reaction fluid R2 before the post-reaction fluid R2 is supplied to the distillation section 246.

(9) The plants 500A to 500D according to Aspect 9 are the plants 500A to 500D of (8), further including: the expansion section 249 that is provided on the downstream side of the cooler 214 to expand the post-reaction fluid R2, wherein the heating section 242 heats the post-reaction fluid R2 expanded by the expansion section 249.

Accordingly, since the post-reaction fluid R2 is expanded, the pressure of the post-reaction fluid R2 is decreased. Accordingly, in the heating section 242, the post-reaction fluid R2 can be efficiently heated using the condensation heat generated when the post-reaction fluids R2 and R3 are condensed.

(10) The plant 500D according to Aspect 10 is the plant 500D of any one of (1) to (9), wherein the post-reaction fluids R2 and R3 are used as the fuel of the drive machine 110 driven by the fuel.

An example of the drive machine 110 is a gas turbine.

This plant 500D can effectively use the energy of the plant 500D by using the obtained post-reaction fluids R2 and R3 as the fuel of the drive machine 110. As a result, it is possible to suppress the specific substance contained in the raw material fluid from leaking out of the plant 500D.

(11) The plant 500D according to Aspect 11 is the plant 500D of (10), further including: the storage units 401A to 401C that store the post-reaction fluids R2 and R3 as the fuel.

Accordingly, since the post-reaction fluids R2 and R3 are stored, the post-reaction fluids R2 and R3 can be used as the fuel of the drive machine 110 if necessary.

(12) The plant 500D according to Aspect 12 is the plant 500D of (10) or (11), wherein the heat of the exhaust gas EG of the drive machine 110 is used in the heat source usage facility 140.

Accordingly, since the heat of the exhaust gas EG of the drive machine 110 is used in the heat source usage facility 140 and the heat medium fluid H from which heat has been recovered by the heat medium supply line 710 is used as the heat source, the heat source usage facility 140 can be efficiently driven.

(13) The plants 500Ato 500D according to Aspect 13 are the plants 500Ato 500D of any one of (1) to (12), wherein the raw material fluid R1 is a gas containing carbon dioxide as the specific substance.

Accordingly, the crude fluid R2 and the product fluid R3 are obtained by using carbon dioxide as the raw material fluid R1. Thus, it is possible to suppress the amount of carbon dioxide discharged in the plant 500A.

(14) The plants 500A to 500D according to Aspect 14 are the plants 500A to 500D of (13), wherein the carbon dioxide as the specific substance is recovered from the exhaust gas EG of the drive machine 110.

Accordingly, since carbon dioxide contained in the exhaust gas EG is the raw material fluid R1, it is possible to suppress the amount of carbon dioxide discharged in the exhaust gas EG of the plant 500A.

(15) The plants 500A to 500D according to Aspect 15 are the plants 500A to 500D of any one of (1) to (14), wherein the raw material fluid R1 contains hydrogen.

Accordingly, the post-reaction fluids R2 and R3 can be obtained from a gas containing carbon dioxide by using hydrogen, and the amount of carbon dioxide discharged in the plants 500A to 500D can be suppressed.

(16) The plants 500A to 500D according to Aspect 16 are the plants 500A to 500D of (15), wherein the hydrogen is supplied from the outside.

Accordingly, since hydrogen is supplied from the outside, the post-reaction fluids R2 and R3 can be obtained from a gas containing carbon dioxide, and the amount of carbon dioxide discharged in the plants 500A to 500D can be suppressed.

(17) The plants 500A to 500D according to Aspect 17 includes: the drive machine 110 that is driven by the fuel F; the recovery section 213 that recovers carbon dioxide in the exhaust gas EG of the drive machine 110; and the synthesis reactor 230 that causes a chemical reaction of the raw material fluid R1 containing the carbon dioxide recovered by the recovery section 213 to produce the post-reaction fluids R2 and R3 containing a compound, wherein the compound is used as the fuel F of the drive machine 110.

Accordingly, since carbon dioxide in the exhaust gas EG is recovered and the post-reaction fluids R2 and R3 are obtained from the raw material fluid R1 containing the recovered carbon dioxide, it is possible to suppress the amount of carbon dioxide discharged in the plants 500Ato 500D. Furthermore, since the compound contained in the post-reaction fluids R2 and R3 is used as the fuel F of the drive machine 110, the drive machine 110 can be efficiently driven. Thus, it is possible to efficiently use thermal energy when producing the post-reaction fluids R2 and R3 as a compound.

(18) The plant 500D according to Aspect 18 includes: the synthesis reactor 230 that causes a chemical reaction of the raw material fluid R1 to produce the crude fluid R2 containing a compound; the distillation section 246 that applies a heat to the crude fluid R2 for distillation and obtains the product fluid R3 having an increased concentration of the compound; the crude fluid delivery pipe 402C that extracts the crude fluid R2 from between the synthesis reactor 230 and the distillation section 246; and the product fluid delivery pipes 402A and 402B that extract the product fluid R3 after distillation from the distillation section 246, wherein when the heat available in the distillation section 246 is large, the ratio of the flow rate of the product fluid R3 extracted from the product fluid delivery pipes 402A and 402B to the sum of the flow rate of the product fluid R3 extracted from the product fluid delivery pipes 402A and 402B and the flow rate of the crude fluid R2 extracted from the crude fluid delivery pipe 202C is increased compared to when the heat available in the distillation section 246 is small.

Accordingly, in the distillation section 246, a heat is applied to the crude fluid R2 for distillation to obtain the product fluid R3 having an increased concentration of the compound. The product fluid on the downstream side of the distillation section 246 has a high concentration of the compound than the crude fluid R2 on the upstream side of the distillation section 246. As the concentration of the compound increases, the more heat is required to distill and purify the compound. Therefore, the efficiency of the plant can be increased by increasing the flow rate of the product fluid R3 when more heat is available in the distillation section 246 and increasing the flow rate of the crude fluid R2 when less heat is available in the distillation section 246.

(19) The plants 500A to 500D according to Aspect 19 includes: the cooling section 223 that cools the fluid R2 and condenses a part of the fluid; the separators 244 and 245 that separate a liquid phase of the fluid R2; the heating section 242 that heats the liquid phase of the fluid R2 and vaporizes at least a part of the liquid phase; and the distillation section 246 that distills the liquid phase of the fluid R2 heated by the heating section 242, wherein the heating section 242 heats the liquid phase of the fluid R2 using the condensation heat generated in the cooling section 223.

Accordingly, the heating section 242 heats the liquid phase of the fluid R2 on the downstream side of the separators 244 and 245 using the condensation heat generated in the cooling section 223 to vaporize at least a part of the liquid phase. Thus, since the vaporization which requires a large amount of heat can be performed using the condensation heat which generates a large amount of heat, it is possible to efficiently preheat the fluid R2 before the fluid R2 is supplied to the distillation section 246.

(20) The plants 500A to 500D according to Aspect 20 are the plants 500A to 500D of (19), further including: the expansion section 249 that expands the fluid R2 cooled by the cooling section 223, wherein the heating section 242 heats the fluid R2 expanded by the expansion section 249.

Accordingly, the pressure of the fluid R2 is decreased by expanding the fluid R2 in the expansion section 249. Accordingly, the fluid R2 on the high temperature side of the heating section 242, that is, the upstream side of the separators 244 and 245 has a higher pressure than the fluid R2 on the low temperature side of the heating section 242, that is, the downstream side of the separators 244 and 245. Thus, the temperature at which the fluid R2 is condensed on the high temperature side of the heating section 242 can be made higher than the temperature at which the fluid R2 on the low temperature side of the heating section 242 is vaporized. As a result, in the heating section 242, it is possible to use a large amount of generated condensation heat to perform vaporization which requires a large amount of heat.

(21) The plants 500A to 500D according to Aspect 21 are the plants 500A to 500D of (19) or (20), further including: the synthesis reactor 230 that produces the crude fluid R2 containing a compound by a chemical reaction, wherein the crude fluid R2 is supplied to the cooling section 223 as the fluid and the product fluid R3 having an increased concentration of the compound is obtained in the distillation section 246.

Accordingly, the pressure of the crude fluid R2 is decreased by expanding the crude fluid R2 synthesized by the synthesis reactor 230 in the expansion section 249. Accordingly, the temperature at which the crude fluid R2 on the high temperature side of the heating section 242 is condensed can be made higher than the temperature at which the crude fluid R2 on the low temperature side of the heating section 242 is vaporized. As a result, in the heating section 242, it is possible to use a large amount of generated condensation heat to perform vaporization of the crude fluid R2 which requires a large amount of heat. Accordingly, it is possible to efficiently obtain the product fluid R3 having an increased concentration of the compound in the distillation section 246.

(22) The plants 500A to 500D according to Aspect 22 includes: the preheater 223 that preheats the gas phase raw material fluid R1; and the synthesis reactor 230 that causes a chemical reaction of the raw material fluid R1 preheated by the preheater 223 to obtain the post-reaction fluid R2, wherein in the preheater 223, the post-reaction fluid R2 is cooled by the heat exchange between the post-reaction fluid R2 on the high temperature side and the raw material fluid R1 on the low temperature side, and wherein the boiling point of the post-reaction fluid R2 is higher than the boiling point of the raw material fluid R1, and at least a part of the post-reaction fluid R2 is condensed on the high temperature side of the preheater 223.

Accordingly, it is possible to preheat the raw material fluid R1 by effectively using the condensation heat of the post-reaction fluid R2 in the preheater 223. The boiling point of the post-reaction fluid R2 is higher than the boiling point of the raw material fluid R1. Then, in the preheater 223, while a part of the post-reaction fluid R2 is condensed, the raw material fluid R1 maintains a gas phase state and does not change phase, and the condensation heat of the post-reaction fluid R2 can be effectively used to effectively heat the raw material fluid R1. In this way, although the post-reaction fluid R2 is the same fluid before and after the chemical reaction on the high temperature side and the low temperature side of the second preheater 223, the components change due to the chemical reaction in the synthesis reactor 230, so that the boiling point increases and the gas phase on the low temperature side can be heated using the condensation heat on the high temperature side.

(23) The plants 500A to 500D according to Aspect 23 are the plants 500A to 500D of (22), further including: the cooling section 223 that cools the post-reaction fluid R2 and condenses a part of the post-reaction fluid; the separators 244 and 245 that separate a liquid phase of the post-reaction fluid R2; the heating section 242 that heats the liquid phase of the post-reaction fluid R2 by using the condensation heat generated in the cooling section 223 and vaporizes at least a part of the liquid phase; and the distillation section 246 that distills the liquid phase of the post-reaction fluid R2 heated by the heating section 242 and obtains the product fluid R3 having an increased concentration of the compound.

Accordingly, the heating section 242 heats the liquid phase of the post-reaction fluid R2 on the downstream side of the separators 244 and 245 using the condensation heat generated in the cooling section 223 and vaporizes at least a part of the post-reaction fluid. Thus, since the vaporization of the post-reaction fluid R2 which requires a large amount of heat can be performed by the condensation heat generating a large amount of heat, it is possible to efficiently preheat the fluid R2 before the fluid R2 is supplied to the distillation section 246. Thus, it is possible to efficiently obtain the product fluid R3 having an increased concentration of the compound in the distillation section 246.

### INDUSTRIAL APPLICABILITY

According to the plant of the present disclosure, it is possible to efficiently use thermal energy when producing a compound.

### REFERENCE SIGNS LIST

| | | | |
|---|---|---|---|
| 100 | Gas turbine combined cycle plant section | 110 | Gas turbine (drive machine) |
| 112 | Air compressor | 113 | Combustor |
| 114 | Turbine | 115 | Gas turbine rotor |
| 116 | Fuel compressor | 117 | Generator |
| 120 | Heat recovery boiler | 121 | Low-pressure economizer |
| 122 | Low-pressure evaporator | 123 | High-pressure pump |
| 124 | Intermediate-pressure pump | 125 | First high-pressure economizer |
| 125i | Second high-pressure economizer | 126 | High-pressure evaporator |
| 127 | First high-pressure superheater | 128 | Second high-pressure superheater |
| 131 | Reheater | 135 | Intermediate-pressure economizer |
| 136 | Intermediate-pressure evaporator | 137 | Low-pressure superheater |
| 138 | Intermediate-pressure superheater | 140 | Heat source usage facility |
| 141 | High-pressure steam turbine | 142 | Intermediate-pressure steam turbine (prime mover) |
| 143 | Low-pressure steam turbine | 143m | Intermediate stage |
| 151 | Condenser | 153 Feed | water pump |
| 161 | Generator | 200A to 200D | Synthesis processing section |
| 210 | Separation section | 211 | Absorption tower (absorption section) |
| 212 | Stack | 213 | Regeneration tower (recovery section) |
| 214 | Cooler | 215 | Regeneration heat exchanger |
| 217 | Heat exchanger | 220 | Preheating section |
| 221 | Intermediate cooling compressor | 221a to 221c | Compressor |
| 221p, 221q | Intermediate cooler | 222 | First preheater |
| 223 | Second preheater (preheater) | 224 | Third preheater |
| 225 | Fourth preheater | 230 | Synthesis reactor |
| 240 | Post-processing section | 241 | First cooler |
| 242 | Second cooler (heating section, cooling section) | 243 | Third cooler |
| 244 | First separator (separator) | 245 | Second separator (separator) |
| 246 | Distillation tower (distillation section) | 247 | Rectification tower |
| 248 | Distillation tower top cooler | 249 | Expansion valve (expansion section) |
| 250 | Rectification tower top cooler | 401Ato 401C | Storage unit |
| 402A, 402B | Product fluid delivery pipe | 402C | Crude fluid delivery pipe |
| 403 | Supply pump | 500A to 500D | Plant |
| 600 | Heat pump | 610 | First side pipe |
| 610p | Pump | 620 | Second side pipe |
| 620p | Pump | 621 | Circulation fluid pipe |
| 700 | Extraction pipe | 701 | Low-temperature steam pipe |
| 702 | Circulation pipe | 702p | Pump |
| 703 | Pipe | 704 | Pipe |
| 710 | Heat medium supply line | 711 | Pipe |
| 712 | One end | 713 | Other end |
| 714 | Pipe | 721 | Circulation pipe |
| 721p | Pump | 731 | Heating pipe |
| 800 | Delivery pipe | 801 | Preheating pipe |
| 811 | Crude fluid circulation line | 812 | Crude fluid cooling line |
| 830 | Circulation pipe | 831 | Recycle pipe |
| 832 | Compressor | 833 | Connection pipe |
| 249 | Expansion valve | EG | Exhaust gas |
| F | Fuel | F1 | Fluid |
| F2 to F5 | Circulation fluid | H | Heat medium fluid |
| R | Turbine rotor | R1 | Raw material fluid |
| R2 | Crude fluid (post-reaction fluid, fluid) | R3 | Product fluid (post-reaction fluid) |

## Claims

1. A plant comprising:
a synthesis reactor that causes an exothermic chemical reaction of a raw material fluid containing a specific substance to produce a post-reaction fluid containing a compound;
a heat medium supply line that recovers heat generated by the exothermic chemical reaction in the synthesis reactor; and
a heat source usage facility that uses a heat medium fluid which has been recovered heat in the heat medium supply line as a heat source.

2. The plant according to claim 1,
wherein the heat medium supply line evaporates the heat medium fluid to recover heat generated by the exothermic chemical reaction.

3. The plant according to claim 1 or 2,
wherein the heat source usage facility further includes a prime mover that is driven by using the heat medium fluid having passed through the heat medium supply line.

4. The plant according to claim 3,
wherein the prime mover is driven by the expansion of the heat medium fluid.

5. The plant according to claim 4,
wherein the heat of the heat medium fluid with a decreased temperature by expanding through the prime mover is used for at least one of the production of the raw material fluid, or preheat of the raw material fluid, or evaporation of the raw material fluid or the distillation of the post-reaction fluid.

6. The plant according to claim 3, further comprising:
an absorption section that absorbs the specific substance contained in the raw material fluid by an absorbent; and
a recovery section that separates and recovers the specific substance from the absorbent,
wherein the recovery section separates the specific substance from the absorbent by performing heating using the heat extracted from the prime mover.

7. The plant according to claim 6,
wherein the absorbent is a phase separation type absorbing liquid.

8. The plant according to claim 1, further comprising:
a cooler that cools the post-reaction fluid and condenses a part of the post-reaction fluid;
a separator that separates a liquid phase of the post-reaction fluid from the post-reaction fluid cooled by the cooler;
a heating section that heats the liquid phase of the post-reaction fluid; and
a distillation section that distills the post-reaction fluid heated by the heating section,
wherein the heating section heats the liquid phase of the post-reaction fluid by using an exhaust heat of the cooler and vaporizes at least a part of the liquid phase.

9. The plant according to claim 8, further comprising:
an expansion section that is provided on the downstream side of the cooler to expand the post-reaction fluid,
wherein the heating section heats the post-reaction fluid expanded by the expansion section.

10. The plant according to claim 1,
wherein the post-reaction fluid is used as a fuel of a drive machine driven by the fuel.

11. The plant according to claim 10, further comprising:
a storage unit that stores the post-reaction fluid used as the fuel.

12. The plant according to claim 10 or 11,
wherein the heat of an exhaust gas of the drive machine is used in the heat source usage facility.

13. The plant according to claim 1,
wherein the raw material fluid is a gas that contains carbon dioxide as the specific substance.

14. The plant according to claim 13,
wherein the carbon dioxide as the specific substance is recovered from an exhaust gas of a drive machine.

15. The plant according to claim 1,
wherein the raw material fluid contains hydrogen.

16. The plant according to claim 15,
wherein the hydrogen is supplied from the outside.

17. A plant comprising:
a drive machine that is driven by a fuel;
a recovery section that recovers carbon dioxide in an exhaust gas of the drive machine; and
a synthesis reactor that causes a chemical reaction of a raw material fluid containing the carbon dioxide recovered by the recovery section to produce a post-reaction fluid containing a compound,
wherein the compound is used as the fuel of the drive machine.

18. A plant comprising:
a synthesis reactor that causes a chemical reaction of a raw material fluid to produce a crude fluid containing a compound;
a distillation section that applies a heat to the crude fluid for distillation and obtains a product fluid having an increased concentration of the compound;
a crude fluid delivery pipe that extracts the crude fluid from between the synthesis reactor and the distillation section; and
a product fluid delivery pipe that extracts the product fluid after distillation from the distillation section,
wherein when the heat available in the distillation section is large, the ratio of the flow rate of the product fluid extracted from the product fluid delivery pipe to the sum of the flow rate of the product fluid extracted from the product fluid delivery pipe and the flow rate of the crude fluid extracted from the crude fluid delivery pipe is increased compared to when the heat available in the distillation section is small.

19. A plant comprising:
a cooling section that cools a fluid and condenses a part of the fluid;
a separator that separates a liquid phase of the fluid;
a heating section that heats the liquid phase of the fluid and vaporizes at least a part of the liquid phase; and
a distillation section that distills the liquid phase of the fluid heated in the heating section,
wherein the heating section heats the liquid phase of the fluid by using a condensation heat generated in the cooling section.

20. The plant according to claim 19, further comprising:
an expansion section that expands the fluid cooled in the cooling section,
wherein the heating section heats the fluid expanded in the expansion section.

21. The plant according to claim 19 or 20, further comprising:
a synthesis reactor that produces a crude fluid containing a compound by a chemical reaction,
wherein the crude fluid is supplied to the cooling section as the fluid and a product fluid of which a concentration of a compound is increased is obtained in the distillation section.

22. A plant comprising:
a preheater that preheats a gas phase raw material fluid; and
a synthesis reactor that causes a chemical reaction of the raw material fluid preheated by the preheater to obtain a post-reaction fluid,
wherein in the preheater, the post-reaction fluid is cooled by the heat exchange between the post-reaction fluid on a high temperature side and the raw material fluid on a low temperature side, and
wherein a boiling point of the post-reaction fluid is higher than a boiling point of the raw material fluid, and at least a part of the post-reaction fluid is condensed on a high temperature side of the preheater.

23. The plant according to claim 22, further comprising:
a cooling section that cools the post-reaction fluid and condenses a part of the post-reaction fluid;
a separator that separates a liquid phase of the post-reaction fluid;
a heating section that heats the liquid phase of the post-reaction fluid by using a condensation heat generated in the cooling section and vaporizes at least a part of the liquid phase; and
a distillation section that distills the liquid phase of the post-reaction fluid heated in the heating section and obtains a product fluid of which a concentration of a compound is increased.
